# EUROPÄISCHE PATENTSCHRIFT

(11) **EP 1 409 282 B1**
(45) Veröffentlichungstag und Bekanntmachung des Hinweises auf die Patenterteilung: **09.12.2009**
(21) Anmeldenummer: 01270181.9
(22) Anmeldetag: 25.09.2001
(51) Int. Cl.: B60K 6/36, B60K 6/365, B60K 6/445, B60K 6/547, B60W 10/06, B60W 10/08, B60W 20/00, F16H 3/72

(54) **VERFAHREN ZUM BETRIEB EINES VON EINEM VERBRENNUNGSMOTOR UND ZWEI ELEKTROMASCHINEN ANGETRIEBENEN KRAFTFAHRZEUGS**
METHODS FOR OPERATING A MOTOR VEHICLE DRIVEN BY AN INTERNAL COMBUSTION ENGINE AND BY TWO ELECTRIC MACHINES
PROCEDES POUR ACTIONNER UNE AUTOMOBILE ENTRAINEE PAR UN MOTEUR A COMBUSTION INTERNE ET DEUX MOTEURS ELECTRIQUES

(30) Priorität: 15.12.2000 DE 10062556
(43) Veröffentlichungstag der Anmeldung: 21.04.2004
(73) Patentinhaber: ROBERT BOSCH GMBH, 70442 Stuttgart (DE)
(72) Erfinder: TUMBACK, Stefan, 70469 Stuttgart (DE); SCHNELLE, Klaus-Peter, 71254 Ditzingen (DE)
(86) Internationale Anmeldenummer: PCT/DE2001/003688
(87) Internationale Veröffentlichungsnummer: WO 2002/047931

(56) Entgegenhaltungen:
- DE-A- 19 903 936
- US-A- 5 558 595
- US-A- 5 935 035

## Beschreibung

Die Erfindung geht aus von einem Verfahren nach dem Oberbegriff des unabhängigen Ansprüchs.

Ein derartiges Verfahren ist zum Beispiel aus der DE 199 03 936 A1 bekannt. Bei diesem Verfahren wird ein Kraftfahrzeug zumindest zeitweise von einem Verbrennungsmotor und zumindest zeitweise von mindestens einer von zwei Elektromaschinen angetrieben. Das Kraftfahrzeug weist ein Getriebe auf mit einer Eingangswelle, einer Ausgangswelle und zwei unabhängig voneinander steuerbaren Leistungspfaden. Jeder Leistungspfad ist über jeweils ein Umlaufgetriebe mit einer der beiden Elektromaschinen und der Eingangswelle gekoppelt und über schaltbare Übersetzungen mit der Ausgangswelle koppelbar. Ist in jedem Leistungspfad ein Gang eingelegt, so kann gleichzeitig über beide Leistungspfade Leistung an die Ausgangswelle übertragen werden.

Dieses Verfahren hat den Vorteil, dass mit einem mechanisch relativ einfach aufgebauten Getriebe ein guter Wirkungsgrad erzielbar ist. Allerdings besteht die Möglichkeit, dass ein kreisender mechanischer Leistungsfluß in den Leistungspfaden entsteht. Außerdem muss beim Anfahren oder beim Starten des Verbrennungsmotors erst noch ein zusätzlicher Gang eingelegt werden, was in diesem Augenblick in dem betreffenden Leistungspfad eine Zugkraftunterbrechung zur Folge hat. Dann muss noch die Motorbremse gelöst werden. Beide Fälle sind mit Verlusten behaftet, wodurch der Wirkungsgrad sinkt.

Aufgabe der Erfindung ist es, das bekannte Verfahren derart weiterzubilden, dass ein effizienterer Betrieb eines Kraftfahrzeuges möglich ist. Gelöst wird diese Aufgabe durch die Merkmale des unabhängigen Anspruchs 1.

Das erfindungsgemäße Verfahren mit den kennzeichnenden Merkmalen des unabhängigen Anspruchs 1 hat den Vorteil, dass ein gegenüber dem bekannten Verfahren noch effizienterer Betrieb möglich ist, denn ein kreisender mechanischer Leistungsfluß im Getriebe wird zumindest vermindert.

Zur Erfassung der kreisenden mechanischen Leistung können die vom Verbrennungsmotor und von den Elektromaschinen erzeugten Drehmomente ermittelt und ausgewertet werden. Auch ist es möglich, alternativ hierzu oder zusätzlich die Drehmomente bzw. deren Vorzeichen miteinander zu vergleichen. Diese Erfassung kann auf den aus den Steuergeräten bekannten Daten erfolgen.

Weitere Vorteile und vorteilhafte Weiterbildungen der erfindungsgemäßen Verfahren ergeben sich aus den Unteransprüchen und der Beschreibung.

Ein Ausführungsbeispiel der Erfindung ist in der Zeichnung dargestellt und in der nachfolgenden Beschreibung näher erläutert. Es zeigen
- Figur 1: eine Ansicht eines Getriebes,
- Figur 2: die Topologie des Getriebes nach Figur 1,
- Figur 3: die Funktion der Basiselemente des Getriebes,
- Figur 4: den Leistungsfluß im Getriebe bei stationärer Fahrt,
- Figur 5: den Leistungsfluß beim elektrischen Anfahren mit den Gängen R und 2 im Moment des Motorstarts,
- Figur 6: den Leistungsfluß beim elektrischen Anfahren mit den Gängen R und 2 während dem Motorstart,
- Figur 7: den Leistungsfluß beim elektrischen Anfahren mit den Gängen 1 und 6 kurz vor dem Motorstart,
- Figur 8: den Leistungsfluß beim elektrischen Anfahren mit den Gängen 1 und 6 im Moment des Motorstarts,
- Figur 9: den Leistungsfluß beim elektrischen Anfahren mit den Gängen 1 und 6 während dem Motorstart,
- Figur 10: den Leistungsfluß im Stationärbetrieb mit den Gängen 1 und 6,
- Figur 11: den Leistungsfluß beim Anfahren ohne Batteriespeisung,
- Figur 12: den Leistungsfluß kurz nach dem Anfahren ohne Batteriespeisung,
- Figur 13: den Leistungsfluß bei der Rekuperation von Bremsenergie mit Schleppbetrieb des Verbrennungsmotors,
- Figur 14: den Leistungsfluß bei der Rekuperation von Bremsenergie mit Schleppbetrieb des Verbrennungsmotors und kreisendem Leistungsfluß,
- Figur 15: den Leistungsfluß bei der Rekuperation von Bremsenergie ohne Schleppbetrieb des Verbrennungsmotors,
- Figur 16: den Leistungsfluß bei der Rekuperation von Bremsenergie ohne kreisenden Leistungsfluß,
- Figur 17: den Leistungsfluß im Boostbetrieb mit kreisendem Leistungsfluß und
- Figur 18: den Leistungsfluß im Boostbetrieb ohne kreisenden Leistungsfluß.

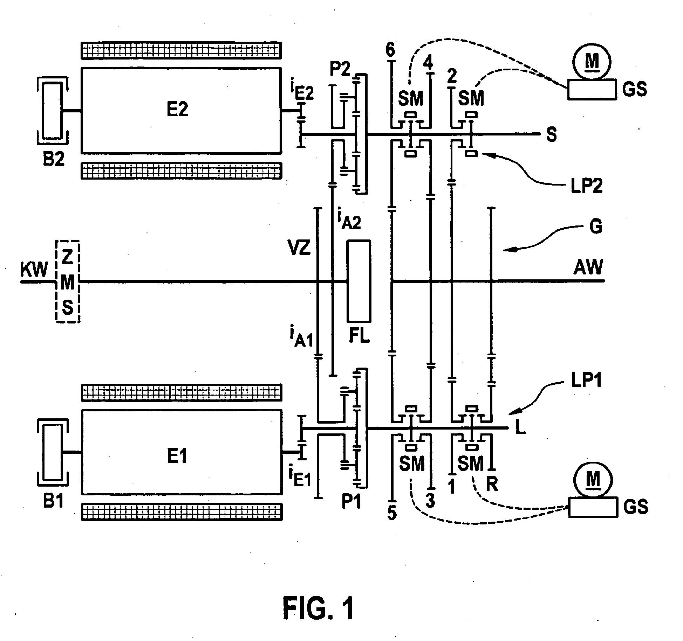

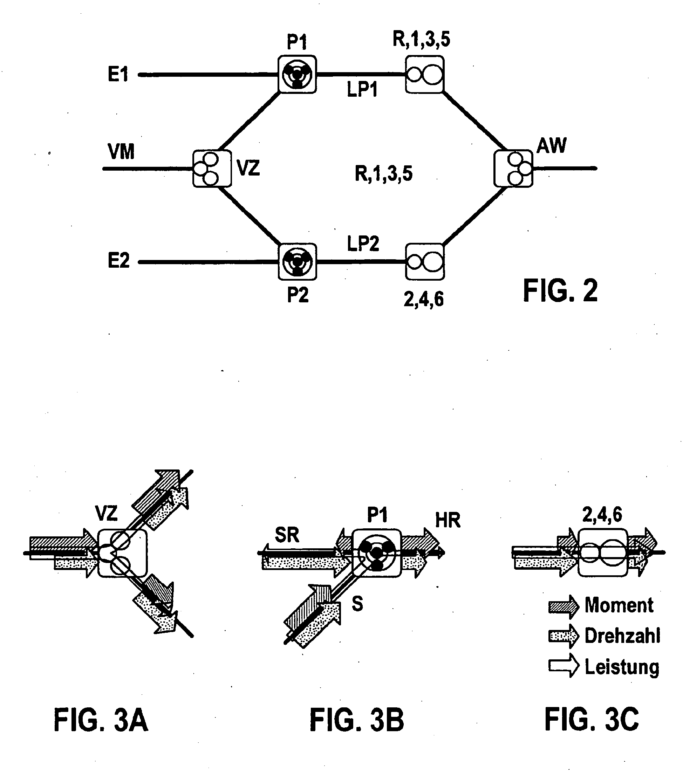

In der Figur 1 ist ein Teil des Antriebsstrangs, insbesondere ein Getriebe G, eines Kraftfahrzeuges dargestellt, wie es bereits aus der DE 199 03 936 A1 bekannt ist. Hierbei werden von einer vom Verbrennungsmotor VM (Figur 2) angetriebenen Kurbelwelle KW bzw. Eingangswelle über ein Zweimassenschwungrad ZMS die Planetenträger zweier Planetengetriebe P1 und P2 über zwei Übersetzungen i_{A1} und i_{A2} einer Verzweigung VZ angetrieben. Statt der Planetengetriebe P1 und P2 können auch andere Umlaufgetriebe verwendet werden, wie zum Beispiel Reibrad-Umlaufgetriebe. Planetengetriebe P1, P2 sind aufgrund ihres Wirkungsgrades jedoch geeigneter. Das Zweimassenschwungrad ZMS bewirkt eine Reduktion der Schwingungsanregung des Getriebes G durch den Verbrennungsmotor VM.

Zwei Elektromaschinen E1 und E2 sind mit den Sonnenrädern der entsprechenden Planetengetriebe P1 und P2 über die Übersetzungen i_{E1} und i_{E2} verbunden. Die miteinander, zum Beispiel über einen elektrischen Zwischenkreis, und mit der Batterie des Kraftfahrzeugs verbundenen Elektromaschinen E1, E2 sind mit einer Leistungselektronik für einen Vierquadrantenbetrieb ausgerüstet.

Das Getriebe G weist zwei über die Elektromaschinen E1, E2 getrennt steuerbare Leistungspfade LP1, LP2 auf. Diese sind folgendermaßen aufgebaut: Die Hohlräder der Planetengetriebe P1, P2 sind mit zwei Vorgelegewellen S und L verbunden, welche durch Getriebesteller GS betätigte Schiebemuffen SM, wobei die Getriebesteller GS von Motoren M angetrieben werden, mit Zahnrädern der Gänge R, 1, 3, 5 bzw. 2, 4, 6 verbunden werden können. R ist der Rückwärtsgang, die Gänge 1 bis 6 sind die Gänge für die Vorwärtsfahrt. Die Zahnräder der Gänge 1 bis 6 und R kämmen mit entsprechenden Gegenzahnrädern auf der Ausgangswelle AW. Auf jeder Vorgelegewelle S, L ist im Betrieb ein Gang R, 1, 3 oder 5 bzw. 2, 4 oder 6 eingelegt. Die Verteilung des Drehmoments auf die beiden Wellen S, L erfolgt in bekannter Weise durch Ansteuerung der Elektromaschinen E1 und E2.

Natürlich sind auch weitere Anordnungsvarianten der Planetengetriebe P1, P2 denkbar. Exemplarisch sei die Einkopplung der Leistung des Verbrennungsmotors über die jeweiligen Hohlräder bzw. die Auskopplung der Leistung zu den Vorgelegewellen über die jeweiligen Stege genannt.

Aus der vereinfachten Darstellung der Figur 2 geht die Topologie des Getriebes G hervor. Das Getriebe G weist zwei unabhängig voneinander steuerbare Leistungspfaden LP1 und LP2 auf, wobei jeder Leistungspfad LP1, LP2 über jeweils ein Umlaufgetriebe (Planetengetriebe P1, P2) mit einer der Elektromaschinen E1, E2 und der Eingangswelle (Kurbelwelle KW) des Getriebes G gekoppelt ist und über schaltbare Übersetzungen (Gänge R und 1 bis 6) mit der Ausgangswelle AW des Getriebes G koppelbar ist, wobei Leistung gleichzeitig über beide Leistungspfade LP1, LP2 übertragbar ist. Die Art der Leistungsübertragung wird vom Verbrennungsmotor VM und von den Elektromaschinen E1, E2 beeinflußt.

Aus den den Figuren 3a bis 3c zugeordneten Pfeilen geht das Moment, die Drehzahl und die Leistung, die proportional dem Produkt aus Moment und Drehzahl ist, bezogen auf die einzelnen Getriebeelemente hervor.

Gemäß der Figur 3a, das die Verzweigung VZ von einer auf zwei Wellen zeigt, geht der Leistungsfluß von einer auf zwei Wellen hervor. Die Verhältnisse der Drehzahlen zueinander bleiben gleich, die Drehmomente teilen sich, wobei die Summe null ergeben muss.

Aus der Figur 3b geht der Leistungsfluß über ein Planetengetriebe P1 oder P2 hervor. Zwei Drehzahlen sind beliebig wählbar, die dritte hängt davon ab, wobei die Drehzahl des Steges ein gewichtetes Mittel der beiden anderen Drehzahlen ist. Alle Drehmomente werden in einem festen Verhältnis aufgeteilt, bzw. stehen in einem festen Verhältnis zueinander, das abhängig von den Zähnezahlen ist.

Die Figur 3c zeigt den Leistungsfluß an einer Übersetzung der Gänge 1 bis 6 oder R. Die Drehzahl und das Drehmoment werden in einem von den Zähnezahlen abhängigen Verhältnis gewandelt, beim Rückwärtsgang R ändert sich zusätzlich die Dreh- und Momentenrichtung. Die übertragene Leistung bleibt als Produkt aus Drehzahl und Moment konstant.

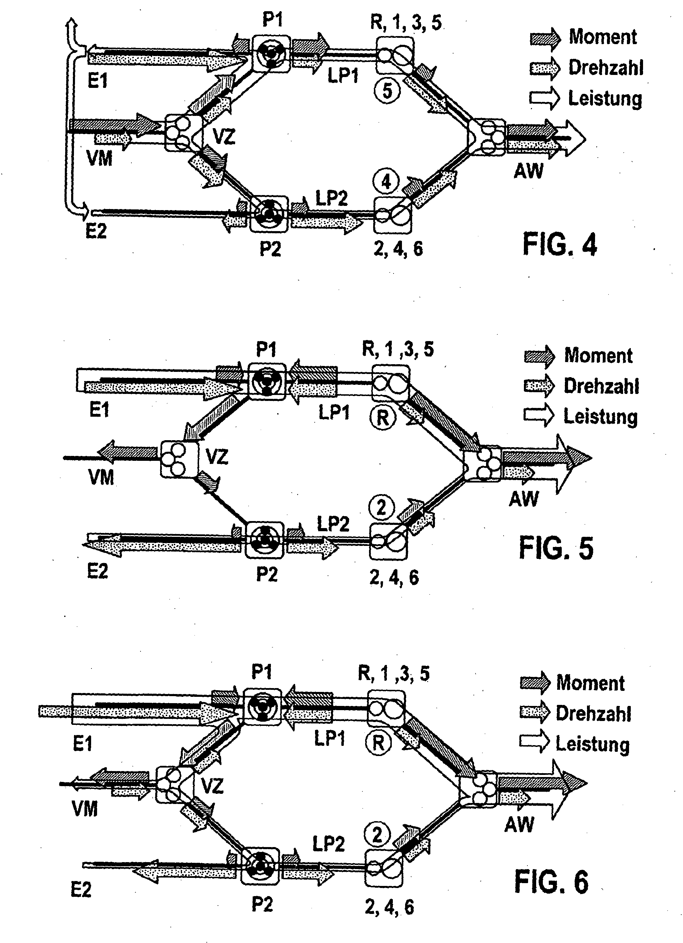

Aus der Figur 4 geht der Leistungsfluß im Getriebe G im stationären Betrieb hervor. Die Leistung fließt vom Verbrennungsmotor VM über die Kurbelwelle KW, teilt sich über die Wellen S und L, über die Gänge 1 bis 6 bzw. R und somit über die beiden Leistungspfade LP1 und LP2 auf und wird auf die Ausgangswelle AW übertragen. Ein kleiner Teil fließt über die Elektromaschinen E1, E2, wobei für das Bordnetz und elektrische Verluste ein Teil abgezweigt wird. Ist eine Elektromaschine E1 oder E2 momentenfrei, stützt die andere das volle Moment ab und die Leistung fließt nur über einen Leistungspfad LP1 bzw. LP2. Dies gilt für beide Leistungspfade LP1, LP2. Alle zwischen diesen beiden Zuständen liegenden Übersetzungen lassen sich stufenlos darstellen.

In der Figur 5 ist der Leistungsfluß beim elektrischen Anfahren mit den bereits eingelegten Gängen R und 2 im Moment des Motorstarts gezeigt. Das Drehmoment der Elektromaschine E1 der Getriebewelle S im Leistungspfad LP1, bei der der Rückwärtsgang R eingelegt ist, wird erhöht und das der anderen Elektromaschine E2 entsprechend vermindert. Damit bleibt das Drehmoment an der Ausgangswelle AW erhalten. Durch die ungleich verteilten Drehmomente entsteht ein zusätzliches Moment auf die Kurbelwelle KW, das den Verbrennungsmotor VM startet.

In der Figur 6 ist der Leistungsfluß beim elektrischen Anfahren mit den Gängen R und 2 während des Motorstarts gezeigt. In diesem Moment dreht sich der Verbrennungsmotor bereits, hat aber noch nicht gezündet. Die Elektromaschine E1 hat hierbei eine hohe Leistung aufzubringen, um gleichzeitig das Kraftfahrzeug anzutreiben und den Verbrennungsmotor VM zu starten. Dies gelingt in der Regel beim Warmstart und bei kleinen Abtriebsleistungen. Werden zum Beispiel zum Starten des Verbrennungsmotors VM 5kW benötigt, kann die Elektromaschine E1 bei max. 10kW Kurzzeitleistung noch 5kW zum Abtrieb liefern. Zusätzlich wird zum Beispiel 1kW von der Elektromaschine E2 geliefert, so dass 6kW am Abtrieb möglich sind.

Dieses Verfahren, bei dem unmittelbar nach dem elektrischen Anfahren der Verbrennungsmotor VM gestartet wird, hat den Vorteil, dass bereits während des Startvorgangs des Verbrennungsmotors eine Abtriebsleistung am Rad zur Verfügung steht, die zur Beschleunigung des Fahrzeugs genutzt werden kann. Dies dient insbesondere bei einem Start-Stopp-Betrieb des Fahrzeugs zur Erhöhung des Komforts, da der Fahrer bereits beim Auslösen der Bedingung für den Motorstart anfahren kann. Dass der im einen Leistungspfad LP1 angeordnete Rückwärtsgang R und der im anderen Leistungspfad LP2 angeordnete 2. Gang eingelegt sind, wirkt sich durch das gegensinnige Drehen der Leistungspfade LP1 und LP2 günstig auf Schwingungen aus. Dieser Effekt wird noch verbessert, wenn der Wert der Übersetzung des Rückwärtsganges gleich dem Wert der Übersetzung des zweiten Ganges, wobei jedoch beide Gänge R und 2 umgekehrte Vorzeichen aufweisen.

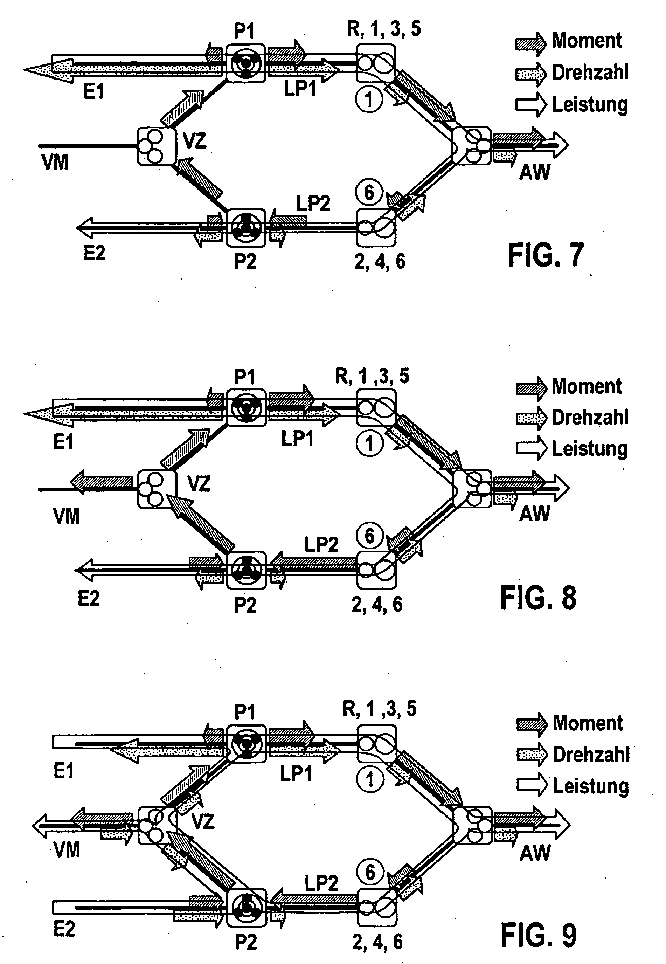

Aus der Figur 7 geht der Leistungsfluß beim elektrischen Anfahren mit den bereits eingelegten Gängen 1 und 6 kurz vor dem Motorstart hervor. Beim elektrischen Anfahren mit den Gängen 1 und 6 wirkt die Elektromaschine E1 als Motor. Ihr Drehmoment wird am Planetengetriebe P1 und am Gang 1 zweimal verstärkt. Die zweite Elektromaschine E2 stützt das Reaktionsmoment auf die Kurbelwelle KW ab. Damit ergibt sich ein umgekehrter Leistungsfluß im Leistungspfad LP2, die zweite Elektromaschine E2 wirkt als Generator. Wegen der Übersetzung des 6. Ganges bleiben die Drehzahlen und damit auch die Leistungen in diesem Leistungspfad LP2 gering.

In der Figur 8 ist der Leistungsfluß beim Motorstart gezeigt. Das Fahrzeug fährt hierbei elektrisch mit den Gängen 1 und 6 an. Um den Start des Verbrennungsmotors VM einzuleiten, wird das Momentengleichgewicht zwischen den beiden Elektromaschinen E1, E2 aufgehoben. Das Moment der Elektromaschine E2 wird deutlich erhöht, das der Elektromaschine E1 nur leicht. Damit bleibt das Abtriebsmoment konstant, der Leistungsfluß im Getriebe G erhöht sich und an der Kurbelwelle KW liegt ein Drehmoment an, das zum Motorstart führt.

In der Figur 9 ist der Leistungsfluß kurz nach dem Motorstart zu erkennen. Der Verbrennungsmotor VM hat schon eine Drehzahl, er hat aber noch nicht gezündet. Nun ändern sich die Drehzahlen und damit der Leistungsfluß erheblich. Die Drehzahl und die motorische Leistung der Elektromaschine E1 nehmen leicht ab, die Elektromaschine E2 ändert ihre Drehrichtung und wechselt vom generatorischen in den motorischen Betrieb. Im Getriebe G kreist Leistung. Gespeist wird der Leistungsfluß aus den beiden Elektromaschinen E1, E2. Senken für die Leistung sind der Verbrennungsmotor VM und die Ausgangswelle AW.

Soll - in Abhängigkeit vom Fahrerwunsch, Fahrzeug- und/oder Umgebungszustand - entweder elektrisch Angefahren und/oder der Verbrennungsmotor VM gestartet werden, so ist also wichtig, dass bei in beiden Leistungspfaden eingelegten Gängen das Drehmoment wenigstens einer Elektromaschine E1, E2 verändert wird. Konkret kann dies so ausgeführt werden, dass Drehmoment bzw. die Richtung des Drehmoments einer Elektromaschine E1, E2 umgekehrt wird oder dass das Drehmoment der einen Elektromaschine E1, E2 erhöht und das Drehmoment der andere Elektromaschine E1, E2 gesenkt wird. Unter bestimmten Umständen ist auch eine unterschiedlich starke Erhöhung beider Drehmomente denkbar. Diese Verfahren haben den Vorteil, dass sie einfach steuerbar sind, da lediglich die Elektromaschinen E1, E2 entsprechend angesteuert werden müssen. Außerdem kann eine Zugkraftunterbrechung in einem der beiden Leistungspfade LP1, LP2 vermieden werden. Dies wirkt sich neben der erhöhten Effizienz auch in einem erhöhten Komfort aus, da das Kraftfahrzeug beim Anfahren weniger zum Ruckeln neigt.

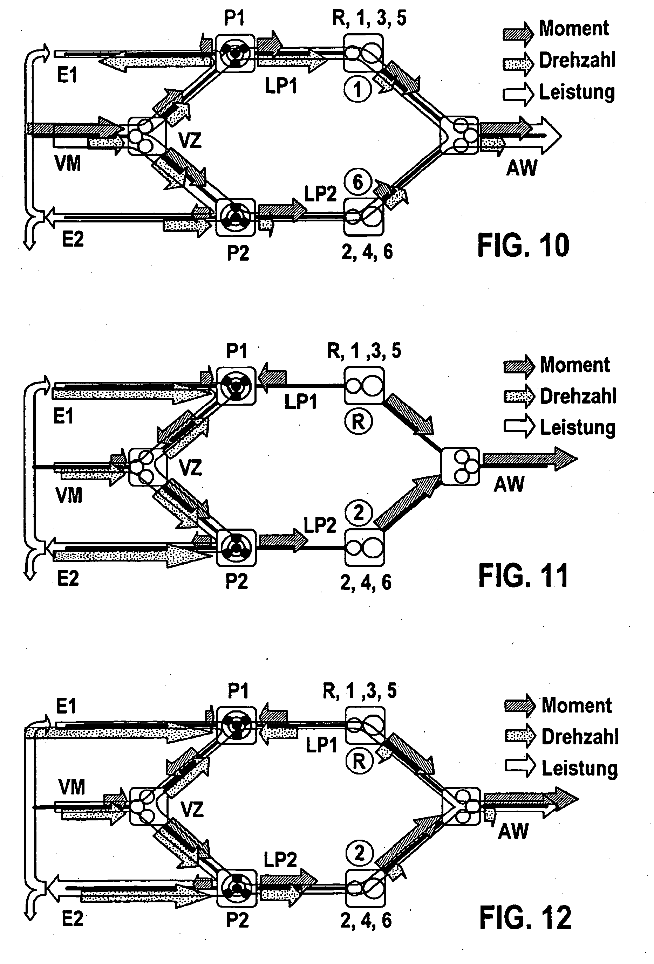

In der Figur 10 ist der Leistungsfluß im stationären Fahrbetrieb mit den Gängen 1 und 6 dargestellt. Nach dem Ende des Startvorgangs hat der Verbrennungsmotor VM gezündet und liefert Drehmoment und Leistung. Es ändern sich die Drehmomente und der Leistungsfluß. Dabei stellt sich unmittelbar und ohne weitere Schaltvorgänge ein typischer Betriebszustand mit der Gangpaarung 1 und 6 ein. Die Gangpaarung 1 und 6 ist unter anderem gut für kleine Fahrzeuggeschwindigkeiten geeignet. Die Elektromaschinen E1, E2 haben dann günstige Betriebsdrehzahlen. Über die Steuerung des Momentenflusses können stufenlos alle Übersetzungen zwischen dem 1. und dem 6. Gang eingestellt werden. Je nach Anforderung, zum Beispiel bei steigender Fahrzeuggeschwindigkeit oder Last, kann diese Gangkombination zum Beispiel durch 1 und 2, 1 und 4, 3 und 6 oder 5 und 6 ersetzt werden.

Es kommt hierbei also darauf an, dass mit zwei auf den Leistungspfaden LP1, LP2 angeordneten Vorwärtsgängen 1 und 6, die weit auseinander liegen und jeweils in unterschiedlichen Leistungspfaden LP1, LP2 angeordnet sind, elektrisch angefahren wird. Dadurch kann sowohl ein relativ großer Geschwindigkeitsbereich abgedeckt werden als auch ein relativ hohes Startmoment für den Verbrennungsmotor realisiert werden. Dies wird besonders günstig, wenn mit dem 1. und höchsten Gang, insbesondere wie hier dem 6. Gang, angefahren wird.

In der Figur 11 ist der Leistungsfluß beim Anfahren mit Hilfe des Verbrennungsmotors VM ohne Batteriespeisung gezeigt. Dies ist zum Beispiel erforderlich, wenn die Batterie voll geladen ist und nicht weiter belastet werden soll. Hierbei wird eine Elektromaschine E2 als Generator und eine Elektromaschine E1 als Motor betrieben. Es sind hierzu zum Beispiel die Gänge R und 2 eingelegt. Bei laufendem Verbrennungsmotor VM und drehenden Elektromaschinen E1, E2 werden nun zwei unterschiedlich gerichtete Drehmomente an den Elektromaschinen E1, E2 eingestellt. Die Elektromaschine E1 im Leistungspfad LP1 mit dem Rückwärtsgang R wirkt motorisch. Die Elektromaschine E2 im Leistungspfad LP2 mit dem Gang 2 wirkt generatorisch. Die entstehende elektrische Leistung wird (abzüglich Verluste bzw. Bordnetzbedarf) der motorisch arbeitenden Elektromaschine E1 wieder zugeführt, so dass die Batterie nicht beteiligt ist. Durch die Richtungsumkehr am Rückwärtsgang R addieren sich die Drehmomente an der Ausgangswelle AW wieder. Solange das Kraftfahrzeug steht, muss der Verbrennungsmotor VM nur die Verlustleistung ausgleichen und bringt dabei nur kleine Momente auf.

In der Figur 12 ist der Leistungsfluß kurz nach dem Anfahren ohne Batteriespeisung dargestellt. Setzt sich das Kraftfahrzeug in Bewegung, so fließt Leistung zur Ausgangswelle AW. Bleibt die Motordrehzahl konstant, erhöhen und vermindern sich die Drehzahlen der beiden Elektromaschinen E1, E2 und damit auch die bei gleicher elektrischer Leistung übertragbaren Momente. Die Leistung des Verbrennungsmotors VM nimmt dann zu, und die zusätzliche Leistung fließt zur Ausgangswelle AW. Im weiteren Verlauf wird der Leistungspfad LP1 völlig momentenfrei, der Rückwärtsgang R wird dann herausgenommen und durch einen Vorwärtsgang (typischerweise 3, aber auch 1 oder 5 möglich) ersetzt. Der Betrieb geht auf den Standardfall für stationären Betrieb über.

Vorteilhaft bei der Gangkombination R und 2 ist insbesondere die Möglichkeit, beim Anfahren sowohl eine erhöhte Bordnetzbelastung als auch einen im Getriebe G kreisenden mechanischen Leistungsfluß zu vermeiden bzw. zumindest zu vermindern.

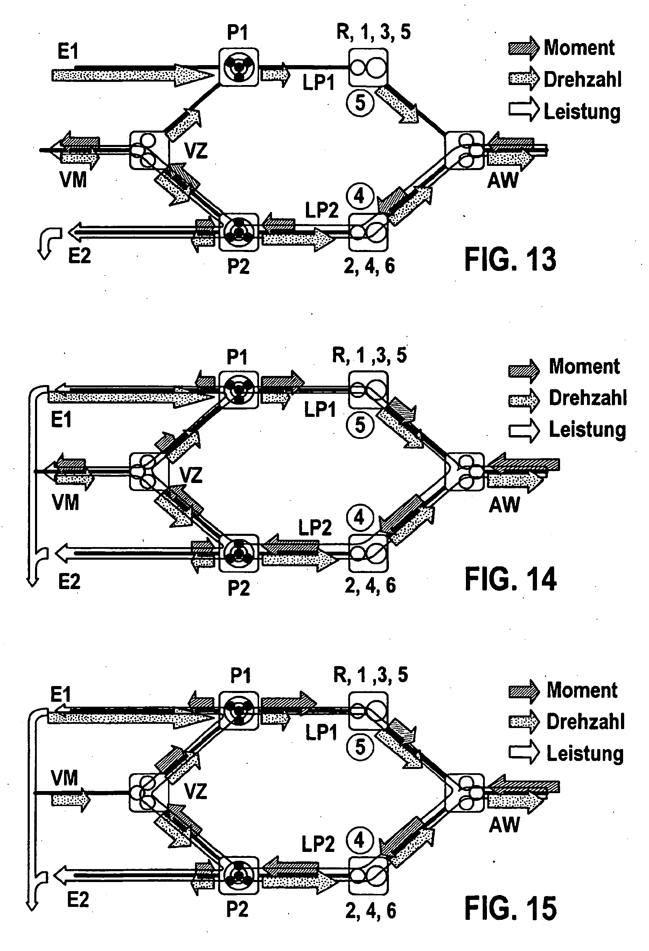

In der Figur 13 ist der Leistungsfluß bei der Rekuperation von Bremsenergie mit Schleppbetrieb des Verbrennungsmotors VM dargestellt. Für die Rekuperation werden im einfachsten Fall die Drehmomente am Verbrennungsmotor VM und an der Ausgangswelle AW umgekehrt. Der Abtrieb wird dann gebremst, der Verbrennungsmotor VM geschleppt. Dadurch vertauschen auch die Elektromaschinen E1, E2 ihre jeweilige Rolle als Motor bzw. Generator. Um einen kreisenden mechanischen Leistungsfluß zu vermeiden bzw. zu vermindern, wird nur die als Generator arbeitende Elektromaschine E2 angesteuert. Die andere Elektromaschine E1 läuft lastfrei mit.

Die Leistung fließt in diesem Betriebszustand von der Ausgangswelle AW zum Verbrennungsmotor VM sowie zur Elektromaschine E2. Der Verbrennungsmotor VM kann also in den Schubbetrieb gebracht werden, in dem kein Kraftstoff verbraucht wird. In diesem Betriebszustand lassen sich kleinere Rekuperationsleistungen mit hohem Wirkungsgrad erzielen. Ein Schaltvorgang ist nicht erforderlich, um aus dem normalen Fahrbetrieb in diese Betriebsart zu wechseln. Es ist von Vorteil, zur Vermeidung oder Verminderung von kreisendem mechanischem Leistungsfluß zwischen den beiden Leistungspfaden, insbesondere bei der Rekuperation von Bremsenergie, nur eine Elektromaschine als Generator zu verwenden.

In der Figur 14 ist im Gegensatz zur Figur 13 ein kreisender mechanischer Leistungsfluß zwischen den beiden Leistungspfaden LP1, LP2 bei der Rekuperation von Bremsenergie mit Schleppbetrieb des Verbrennungsmotors VM gezeigt. Dies tritt bei größeren Rekuperationsleistungen auf. Hierbei wird die andere Elektromaschine E1 als Generator zugeschaltet. Am Abtrieb kann ein höheres Bremsmoment und an beiden Elektromaschinen E1, E2 in Summe mehr Strom erzeugt werden. Dieser Zustand kann ebenfalls direkt aus dem Fahrbetrieb ohne einen zusätzlichen Schaltvorgang erreicht werden. Allerdings hat dies den kreisenden mechanischen Leistungsfluß zur Folge, der in einem schlechteren mechanischen Getriebewirkungsgrad resultiert.

In der Figur 15 ist der Leistungsfluß bei der Rekuperation von Bremsenergie ohne Schleppbetrieb des Verbrennungsmotors gezeigt. Durch eine geeignete Regelung der Elektromaschinen E1, E2 ist es in diesem Betriebszustand auch möglich, den Schleppbetrieb des Verbrennungsmotors VM ganz zu umgehen. In diesem Fall heben sich die Drehmomente, die von den zwei Leistungspfaden LP1, LP2 auf die Kurbelwelle KW wirken, auf. In diesem Betriebszustand muss der Leerlaufregler des Verbrennungsmotors VM diesen auf seiner Drehzahl halten. Dazu ist der Leerlaufverbrauch bei der jeweiligen Drehzahl aufzubringen. Der Betriebszustand ist daher insbesondere dann sinnvoll, wenn die vom Fahrer angeforderte Bremsleistung am Getriebeausgang nicht ausreicht, die Schleppleistung des Verbrennungsmotors VM bei dessen niedrigster möglicher Betriebsdrehzahl aufzubringen.

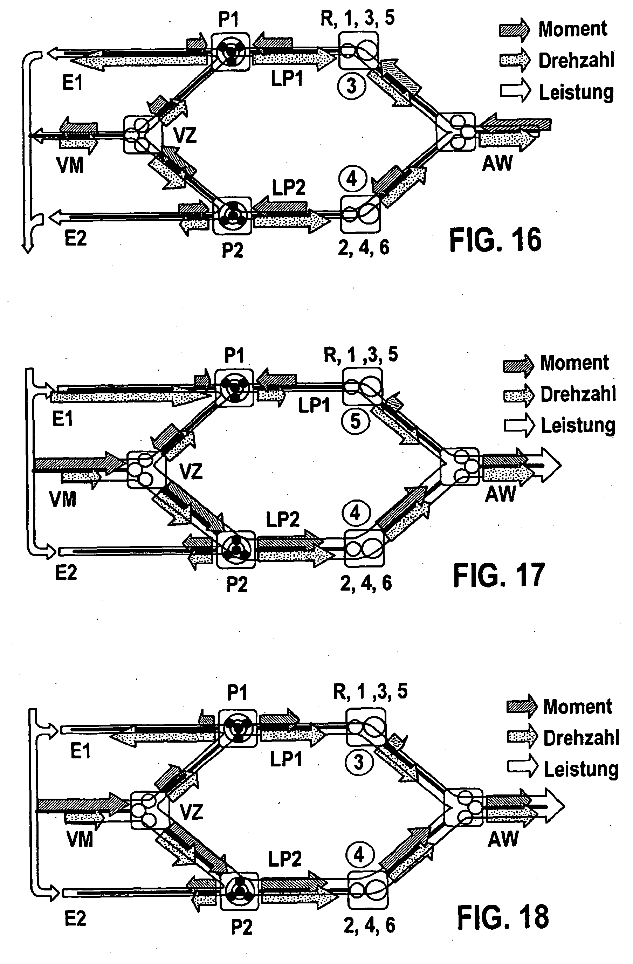

In der Figur 16 ist der Leistungsfluß bei der Rekuperation von Bremsenergie ohne kreisenden Leistungsfluß dargestellt. Zur Umgehung des kreisenden Leistungsflusses im Getriebe G können durch einen Schaltvorgang andere Drehzahlverhältnisse eingestellt werden. Der Leistungsfluß kann so anders geleitet werden. Dies wird vorzugsweise dann durchgeführt, wenn längere Rekuperationsphasen erwartet werden, wie zum Beispiel an einer Gefällstrecke. In dieser Situation hat der Schaltvorgang einen besonders großen Nutzen durch die Verbesserung des mechanischen Getriebewirkungsgrades. Gleichzeitig wird durch den Schaltvorgang eine Gangkombination für den normalen Fahrbetrieb bei einer langsameren Geschwindigkeit vorgewählt, die typischerweise nach dem Rekuperationsvorgang auftritt.

Analog zur Rekuperation kann gemäß Figur 17 auch ein Boostbetrieb realisiert werden. Dabei werden sowohl der Verbrennungsmotor VM als auch beide Elektromaschinen E1, E2 für den Antrieb eingesetzt. Die Folge ist allerdings ein kreisender mechanischer Leistungsfluß, der zu einem niedrigeren Getriebewirkungsgrad führt. Dafür wird aber eine hohe zusätzliche Leistung in den Triebstrang eingebracht.

Zur Vermeidung des kreisenden Leistungsflusses kann gemäß Figur 18 auch beim Boostbetrieb eine andere Gangkombination gewählt werden. Der erforderliche Schaltvorgang entspricht dem Herunterschalten, was auch für konventionelle Getriebe bei hoher Leistungsanforderung erforderlich ist. Alternativ ist auch ein Senken der Drehzahl des Verbrennungsmotors VM bei gleichbleibender Fahrzeuggeschwindigkeit möglich. Dies entspricht einer Änderung der Gesamtübersetzung Motor/Getriebeausgang bei gleichbleibenden Gangstufen. Dem steht allerdings die höhere Leistungsanforderung beim Boostbetrieb entgegen.

Zur Verminderung oder Vermeidung von kreisendem Leistungsfluß zwischen den beiden Leistungspfaden LP1, LP2, insbesondere im Boostbetrieb oder bei der Rekuperation von Bremsenergie, kann also die Übersetzungskombination oder die Motordrehzahl verändert, insbesondere gesenkt, oder nur eine Elektromaschine E1, E2 als Generator bzw. Motor verwendet werden.

Zur Erfassung der kreisenden Leistung können die vom Verbrennungsmotor VM und den Elektromaschinen E1, E2 erzeugten Drehmomente sowie Drehzahlen ausgewertet werden. Die Drehmomente können aus dem oder den vorhandenen Steuergeräten des Verbrennungsmotors VM und der Elektromaschinen E1, E2 ermittelt werden. Durch einen Vergleich der Drehmomente mit zum Beispiel in Tabellen vorhandenen Sollwerten kann ermittelt werden, ob mechanische Leistung durch Kreisen zwischen den beiden Leistungspfaden LP1, LP2 verloren geht. Alternativ oder zusätzlich kann das Vorhandensein eines kreisenden mechanischen Leistungsflusses vorteilhafterweise auch durch Auswertung der Vorzeichen der Drehmomente geprüft werden, da die Vorzeichen auch ein Indikator für kreisenden mechanischen Leistungsfluß sind. Die Größe des kreisenden Leistungsflusses kann unter Einbeziehung der Drehzahlen des Verbrennungsmotors VM und der Elektromaschinen E1, E2 berechnet werden. Ein Schaltvorgang, ein Verändern, insbesondere Senken, der Motordrehzahl oder die Verwendung nur einer Elektromaschine E1, E2 als Generator kann davon abhängig gemacht werden.

## Patentansprüche

1. Verfahren zum Betrieb eines zumindest zeitweise von einem Verbrennungsmotor (VM) und zumindest zeitweise von mindestens einer von zwei Elektromaschinen (E1, E2) angetriebenen Kraftfahrzeugs, das ein Getriebe (G) mit zwei unabhängig voneinander steuerbaren Leistungspfaden (LP1, LP2) aufweist, wobei jeder Leistungspfad (LP1, LP2) über jeweils ein Umlaufgetriebe (P1, P2) mit einer der Elektromaschinen (LP1, LP2) und der Eingangswelle (KW) des Getriebes (G) gekoppelt ist und über schaltbare Übersetzungen (1, 2, 3, 4, 5, 6, R) mit der Ausgangswelle (AW) des Getriebes (G) koppelbar ist, wobei Leistung gleichzeitig über beide Leistungspfade (LP1, LP2) übertragbar ist, **dadurch gekennzeichnet, dass** ein kreisender mechanischer Leistungsfluß zwischen den beiden Leistungspfaden (LP1, LP2) erfasst wird und dass zumindest zur Verminderung des kreisenden mechanischen Leistungsflußes zwischen den beiden Leistungspfaden (LP1, LP2) die Kombination aus den in den beiden Leistungspfaden (L1, L2) jeweils eingestellten Übersetzungen (1, 2, 3, 4, 5, 6, R) oder die Motordrehzahl verändert oder nur eine Elektromaschine (E1, E2) als Generator verwendet wird.

2. Verfahren nach Anspruch 1, **dadurch gekennzeichnet, dass** die zur Verminderung des kreisenden mechanischen Leistungsflußes zwischen den beiden Leistungspfaden (LP1, LP2) verwandte Änderung der Kombination aus den in den beiden Leistungspfaden (L1, L2) jeweils eingestellten Übersetzungen (1, 2, 3, 4, 5, 6, R) oder der Motordrehzahl oder die Verwendung nur einer Elektromaschine (E1, E2) als Generator im Boostbetrieb oder bei der Rekuperation von Bremsenergie erfolgt.

3. Verfahren nach Anspruch 1, **dadurch gekennzeichnet, dass** zur Erfassung der kreisenden mechanischen Leistung die vom Verbrennungsmotor (VM) und von den Elektromaschinen (E1, E2) erzeugten Drehmomente ermittelt und mit vorgegebenen Sollwerten verglichen werden.

4. Verfahren nach Anspruch 1 oder 3, **dadurch gekennzeichnet, dass** zur Erfassung der kreisenden mechanischen Leistung die Vorzeichen der vom Verbrennungsmotor (VM) und von den Elektromaschinen (E1, E2) erzeugten Drehmomente miteinander verglichen werden.

## Claims

1. Method for operating a motor vehicle which is driven at least intermittently by an internal combustion engine (VM) and at least intermittently by at least one of two electric machines (E1, E2) and which has a transmission (G) with two power paths (LP1, LP2) controllable independently of one another, each power path (LP1, LP2) being coupled in each case via an epicyclic gear (P1, P2) to one of the electric machines (E1, E2) and the input shaft (KW) of the transmission (G) and being coupleable via shiftable gear ratios (1, 2, 3, 4, 5, 6, R) to the output shaft (AW) of the transmission (G), power being capable of being transferred simultaneously via both power paths (LP1, LP2), **characterized in that** an orbiting mechanical power flow between the two power paths (LP1, LP2) is detected, and **in that**, at least to reduce the orbiting mechanical power flow between the two power paths (LP1, LP2), the combination of the gear ratios (1, 2, 3, 4, 5, 6, R), set in each case in the two power paths (LP1, LP2), or the engine rotational speed is varied or only one electric machine (E1, E2) is used as a generator.

2. Method according to Claim 1, **characterized in that** the change, used to reduce the orbiting mechanical power flow between the two power paths (LP1, LP2), in the combination of the gear ratios (1, 2, 3, 4, 5, 6, R), set in each case in the two power paths (LP1, LP2), or of the engine rotational speed or the use of only one electric machine (E1, E2) as a generator takes place in the boost operating mode or during the recovery of brake energy.

3. Method according to Claim 1, **characterized in that**, to detect the orbiting mechanical power, the torques generated by the internal combustion engine (VM) and by the electric machines (E1*,* E2) are determined and are compared with stipulated desired values.

4. Method according to Claim 1 or 3, **characterized in that**, to detect the orbiting mechanical power, the signs of the torques generated by the internal combustion engine (VM) and by the electric machines (E1, E2) are compared with one another.

## Revendications

1. Procédé pour actionner un véhicule automobile entraîné au moins temporairement par un moteur à combustion interne (VM) et au moins temporairement par au moins un de deux moteurs électriques (E1, E2), qui présente une boîte de vitesses (G) avec deux chemins de puissance (LP1, LP2) pouvant être commandés indépendamment l'un de l'autre, dans lequel chaque chemin de puissance (LP1, LP2) est couplé au moyen d'un un engrenage planétaire respectif (P1, P2) à un des moteurs électriques (E1, E2) et à l'arbre d'entrée (KW) de la boîte de vitesses (G) et peut être couplé au moyen de transmissions commutables (1, 2, 3, 4, 5, 6, R) à l'arbre de sortie (AW) de la boîte de vitesses (G), dans lequel une puissance peut être transmise simultanément par les deux chemins de puissance (LP1, LP2), **caractérisé en ce que** l'on détecte un flux de puissance mécanique tournante entre les deux chemins de puissance (LP1, LP2) et **en ce que** l'on modifie la combinaison des transmissions (1, 2, 3, 4, 5, 6, R) respectivement établies dans les deux chemins de puissance (LP1, LP2) ou le régime du moteur au moins pour diminuer le flux de puissance mécanique tournante entre les deux chemins de puissance (LP1, LP2) ou l'on utilise qu'un seul moteur électrique (E1, E2) comme générateur.

2. Procédé selon la revendication 1, **caractérisé en ce que** l'on effectue en fonctionnement d'appoint ou lors de la récupération de l'énergie de freinage la modification de la combinaison des transmissions (1, 2, 3, 4, 5, 6, R) respectivement établies dans les deux chemins de puissance (LP1, LP2) ou du régime du moteur pour diminuer le flux de puissance mécanique tournante entre les deux chemins de puissance (LP1, LP2) ou du régime du moteur ou l'utilisation d'un seul moteur électrique (E1, E2) comme générateur.

3. Procédé selon la revendication 1, **caractérisé en ce que**, pour détecter la puissance mécanique tournante, on détermine les couples moteurs produits par le moteur à combustion interne (VM) et par les moteurs électriques (E1, E2) et on les compare à des valeurs de consigne prédéterminées.

4. Procédé selon la revendication 1 ou 3, **caractérisé en ce que**, pour détecter la puissance mécanique tournante, on compare l'un à l'autre les signes des couples moteurs produits par le moteur à combustion interne (VM) et par les moteurs électriques (E1, E2).
